# EUROPÄISCHE PATENTSCHRIFT

(11) **EP 0 985 159 B1**
(45) Veröffentlichungstag und Bekanntmachung des Hinweises auf die Patenterteilung: **24.10.2001**
(21) Anmeldenummer: 98922783.0
(22) Anmeldetag: 29.04.1998
(51) Int. Cl.: G02B 6/12, G02B 6/122, G02B 6/124

(54) **INTEGRIERTE OPTISCHE SCHALTUNG**
INTEGRATED OPTICAL CIRCUIT
CIRCUIT OPTIQUE INTEGRE

(30) Priorität: 17.05.1997 DE 19720784
(43) Veröffentlichungstag der Anmeldung: 15.03.2000
(73) Patentinhaber: Deutsche Telekom AG, 53113 Bonn (DE)
(72) Erfinder: KOOPS, Hans, Wilfried, Peter, D-64372 Ober-Ramstadt (DE); DULTZ, Wolfgang, D-65936 Frankfurt am Main (DE)
(74) Vertreter: Gornott, Dietmar, Dipl.-Ing.
(86) Internationale Anmeldenummer: EP9802532
(87) Internationale Veröffentlichungsnummer: WO9853350

(56) Entgegenhaltungen:
- WO-A-95/30917
- WO-A-96/27225
- DE-A- 19 526 734
- KOOPS H W P: "PHOTONIC CRYSTALS BUILT BY THREE-DIMENSIONAL ADDITIVE LITHOGRAPHY ENABLE INTEGRATED OPTICS OF HIGH DENSITY" PROCEEDINGS OF THE SPIE, Bd. 2849, 5. August 1996, Seiten 248-256, XP000617864
- CHENG C C ET AL: "FABRICATION PF PHOTONIC BAND-GAP CRYSTALS" JOURNAL OF VACUUM SCIENCE AND TECHNOLOGY: PART B, Bd. 13, Nr. 6, 1. November 1995, Seiten 2696-2700, XP000558339

## Beschreibung

Die Erfindung betrifft eine integrierte optische Schaltung mit einem Siliziumsubstrat und darauf angeordneten Wellenleitern mit mindestens einem photonischen Kristall.

Integrierte optische Schaltungen werden in der Nachrichtentechnik für verschiedene Zwecke benötigt, beispielsweise zur Verteilung, Zusammenfassung, spektralen Aufteilung oder zum Schalten von mit Informationen modulierten Lichtströmen. Außerdem können auch andere Schaltungen mit Hilfe optischer Strukturen realisiert werden, beispielsweise Rechnerschaltungen.

Zur Zeit werden integrierte optische Schaltungen mit Wellenleitern aus Polymeren oder III-V-Verbindungs-Halbleitern aufgebaut, die durch lithographische Verfahren strukturiert werden.

Als optisch wirksame Elemente dieser Schaltungen sind unter anderem photonische Kristalle geeignet, die wegen ihrer geringen geometrischen Abmessungen zur Entfaltung ihrer vollen Wirkung ein Wellenleiter-Muster benötigen, in das sie eingefügt werden. Derartige Wellenleiter-Muster sind üblicherweise Streifen-Wellenleiter aus Polymer oder Halbleitermaterial.

Diese Wellenleiter-Muster können in einer komplementären Struktur erzeugt werden, die die Ausbreitung der Photonen-Pulse in der Materie durch ihre Ausführungsform verhindern und die Ausbreitung durch gezielte eingebaute Defekte in sonst vollständig spiegelnde Materie ermöglicht.

Dabei wirkt nicht ein Brechzahlsprung wie bei der Führung von Wellen in optischen Wellenleitern, die durch Dotierung oder als Streifen-Wellenleiter ausgebildet sind, sondern hier begrenzen - theoretisch gegeben - verbotene Bänder die Zustands-Lösung der für bestimmte Wellenlängen erwünschten Eigenlösungen zur Ausbreitung dieser Wellen. Die Beschreibung dieser Wellenleiter ist beispielsweise von Mekis A. et al in Physical Review Letters, Volume 77, No. 18, p. 3787 beschrieben.

Derartige zweidimensionale photonische Kristalle können als Filter verwendet werden, was beispielsweise in Koops, Hans W.P.: "Photonic Crystals Built by Three-dimensional Additive Lithography Enable Integrated Optics of High Density", Proceedings of the SPIE, Band 2849, 5. August 1996, Seiten 248 bis 256 beschrieben ist. Dabei werden einzelne räumlich verteilte Elemente (Drähte) der photonischen Kristalle aus unterschiedlichem Material hergestellt. Ferner sind dreidimensionale photonische Kristalle durch Cheng C C et al.: Fabrication PF Photonic Band-Gap Crystals' Journal of Vacuum Science and Technology: Part B, Band 13, Nr. 6, 01. November 1995, Seiten 2696 bis 2700 bekanntgeworden.

Aufgabe der vorliegenden Erfindung ist es, eine integrierte optische Schaltung anzugeben, bei der von photonischen Kristallen gebildete Wellenleiter für wellenlängenabhängige Ausspiegelungen aus der Substratebene angewendet werden und die mit der erforderlichen Präzision herstellbar ist.

Diese Aufgabe wird erfindungsgemäße dadurch gelöst, daß von jeweils einer Nadel oder einer Bohrung gebildete Elemente, die den photonischen Kristall bilden, schräg zur optischen Achse stehen und zueinander parallel angeordnet sind. Dabei ist vorzugsweise vorgesehen, daß weitere Wellenleiter als Streifen-Wellenleiter ausgebildet sind, wobei zwischen den Streifen-Wellenleitern und dem Siliziumsubstrat eine Isolierschicht angeordnet ist, und daß sich der photonische Kristall von einer Ebene unterhalb der unteren Begrenzungsfläche der Wellenleiter über die obere Begrenzungsfläche der Wellenleiter hinaus erstreckt.

Zur Herstellung der erfindungsgemäßen Schaltung kann mit Vorteil das kommerziell erhältliche Material "Silizium auf Isolator" eingesetzt werden, beispielsweise von dem Hersteller SOITEC SA., Grenoble, Frankreich. Dieses Material ist für Wellenlängen von 1,55 µm gut durchlässig. Silizium besitzt bei diesen Wellenleitern eine sehr hohe Dielektrizitätskonstante von 12, das auch bei den photonischen Kristallen eingesetzt werden kann. An bestimmten Stellen der Schaltung mit sehr geringer Einfügedämpfung eingesetzte spezielle photonische Kristalle gewährleisten die Funktion der Schaltung, beispielsweise als Rechenschaltung, wobei die gesamte Schaltung sehr klein ausgeführt werden kann. So sind beispielsweise 6 Perioden des Gitters der photonischen Kristalle mit einem Gitterabstand von 1/3 der Wellenlänge ausreichend, um eine Abschwächung von 35 dB zu erreichen.

Eine vorteilhafte Ausgestaltung der erfindungsgemäßen Schaltung besteht darin, daß die Elemente des mindestens einen photonischen Kristalls Nadeln mit einer hohen Dielektrizitätskonstanten sind, die in Form eines zweidimensionalen periodischen Gitters angeordnet sind. Es ist jedoch auch durchaus möglich, daß die Elemente des mindestens einen photonischen Kristalls Löcher niedriger Dielektrizitätskonstanten in einem Körper mit einer hohen Dielektrizitätskonstanten sind, die in Form eines zweidimensionalen periodischen Gitters angeordnet sind.

Je nach Voraussetzungen im einzelnen kann vorgesehen sein, daß die Nadeln auf der Isolierschicht stehen, die im Bereich des photonischen Kristalls eine geringere Stärke als unter den Wellenleitern aufweist, oder daß die Nadeln auf dem Siliziumsubstrat stehen.

Eine vorteilhafte Weiterbildung der erfindungsgemäßen Schaltung besteht darin, daß die Zwischenräume zwischen den Nadeln mit nicht-linear-optischem Material ausgefüllt sind und daß mit Hilfe von einer an Feldelektroden angelegten Spannung der Brechungsindex des nicht-linear-optischen Materials einstellbar ist. Damit ist eine Steuerung, beispielsweise des Verhaltens von Filtern möglich, die als integrierte optische Schaltungen ausgeführt sind, siehe auch DE 196 34 893 A1.

Eine weitere vorteilhafte Ausgestaltung besteht darin, daß der mindestens eine photonische Kristall durch die Anordnung der Störstellen ein Abzweigfilter darstellt, bei dem abgezweigtes Licht eines selektierten Wellenlängenbereichs seitlich austritt und der Rest des Lichtes im photonischen Kristall weitergeleitet wird. Das seitliche austretende Licht kann in vielfältiger Weise weitergeleitet werden.

Bei einer anderen Weiterbildung der Erfindung ist vorgesehen, daß seitlich austretendes Licht verschiedener Wellenlängenbereiche auf verschiedene Stellen eines parallel verlaufenden photonischen Kristalls fokussierbar ist. Damit ist die Möglichkeit der Verbindung mehrerer Rechenebenen in einfacher Weise gegeben.

Ausführungsbeispiele der Erfindung sind in der Zeichnung anhand mehrerer Figuren dargestellt und in der nachfolgenden Beschreibung näher erläutert. Es zeigt:
- Fig. 1: einen Querschnitt aus einem Ausschnitt aus einer erfindungsgemäßen Schaltung,
- Fig. 2: eine Draufsicht des in Fig. 1 dargestellten Ausschnitts,
- Fig. 3: eine Draufsicht eiens Teils eines weiteren Ausführungsbeispiels,
- Fig. 4: ein Beispiel für eine optische Verbindung zweier Ebenen der integrierten optischen Schaltung,
- Fig. 5: eine schematische Darstellung eines Beispiels einer optischen Verbindung mehrerer Rechenebenen bei einer erfindungsgemäßen Schaltung und
- Fig. 6: ein mit der erfindungsgemäßen Schaltung realisiertes Mach-Zehnder-Interferometer.

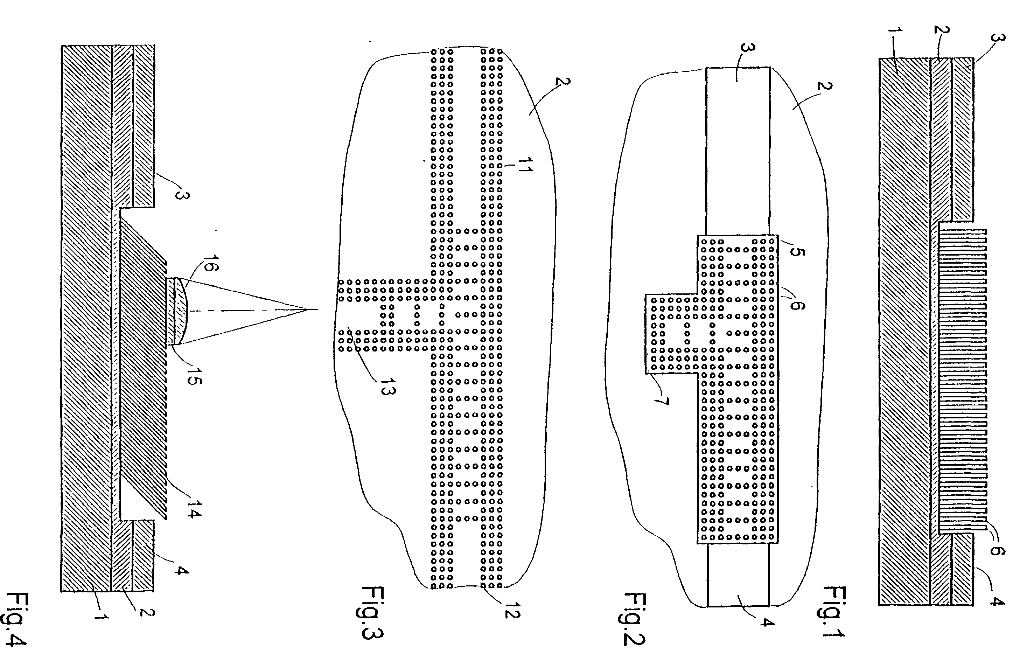

Bei dem Ausführungsbeispiel nach Fig. 1 befindet sich auf einem Siliziumsubstrat 1 eine Isolierschicht 2 aus Silizium-Oxid, auf welcher optische Streifen-Wellenleiter 3, 4 aus Silizium aufgebracht sind. Zwischen den Wellenleitern 3, 4 befindet sich ein photonischer Kristall 5, der von einem Gitter aus Nadeln 6 gebildet ist.

Die Nadeln 6 stehen bei dem Ausführungsbeispiel auf der Isolierschicht 2, die im Bereich des photonischen Kristalls 5 eine Kavität aufweist. Dadurch und daß die Nadeln über die obere Begrenzungsebene der Wellenleiter 3, 4 hinausragen, wird vom photonischen Kristall auch das in Randbereichen außerhalb des Wellenleiters geführte Feld erfaßt.

Die Nadeln 6 können in an sich bekannter Weise durch Korpuskularstrahl-Deposition hergestellt werden. Ein Verfahren dazu ist beispielsweise beschrieben in DE 195 33 148 A1.

Wie in S.Y. Lin, G. Arjavalingam: Optics Letters, Vol. 18, No. 19, 1666 (1990) anhand von Versuchen mit Millimeterwellen gezeigt wurde, genügen bereits sechs Perioden des Gitters mit einer Gitterkonstanten von einem Drittel der Wellenlänge, um eine Dämpfung von 35 dB zu erreichen. Innerhalb des somit gedämpften Wellenlängenbereichs kann durch gezielte Störstellen - d.h. Auslassen von Nadeln - Wellenlängenbereiche mit geringerer Dämpfung geschaffen werden. Bei dem anhand der Figuren 1 und 2 dargestellten Ausführungsbeispiel wird Licht mehrerer Wellenlängen vom Wellenleiter 3 zum Wellenleiter 4 geführt, während an einer Abzweigung 7 Licht einer ausgewählten Wellenlänge austritt. Dabei stehen jeweils die gewählten Abstände in dem mittleren Bereich des photonischen Kristalls vorhandenen Nadeln lediglich beispielhaft für eine genaue Festlegung zur Erzielung der jeweils zu erreichenden Filtereigenschaften.

Bei dem Ausführungsbeispiel nach Fig. 3 sind nicht nur für ein Filter, sondern auch für die Zuführung und Ableitungen photonische Kristalle vorgesehen, wobei die Zuführung 11 und die Ableitungen 12, 13 jeweils als Allpaß dadurch ausgebildet sind, daß im mittleren Bereich keine Nadeln vorgesehen sind.

Fig. 4 zeigt ein Ausführungsbeispiel, bei dem die den photonischen Kristall bildenden Nadeln 14 geneigt sind. In selektierten Bereichen ist eine Deckschicht 15 aufgelegt, so daß Licht dort austritt und durch aufgesetzte Linsen 16 aus vorzugsweise polymeren Material in nicht dargestellte Eintrittsfenster einer darüberliegenden Ebene fokussiert wird. Damit sind dreidimensionale Strukturen, beispielsweise in einer Rechnerschaltung, möglich. Die Linsen können dabei in bekannter Weise mit Elektronenstrahl-Lithographie oder mit optischen Verfahren erzeugt werden.

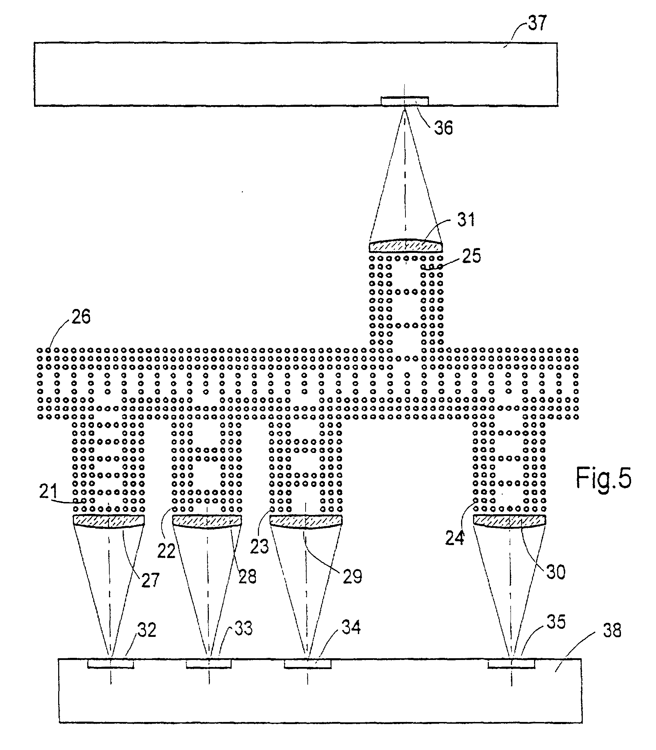

Fig. 5 zeigt einen Ausschnitt aus einer erfindungsgemäßen Schaltung, bei welcher mehrere Abzweigungen 21 bis 25 von einem photonischen Kristall 26 gebildet werden, wobei eine Linse 27 bis 31 das aus der Abzweigung austretende Licht auf Eintrittsflächen 32 bis 36 fokussiert, die an neben dem photonischen Kristall 26 verlaufenden weiteren optischen Elementen 37, 38 angeordnet sind.

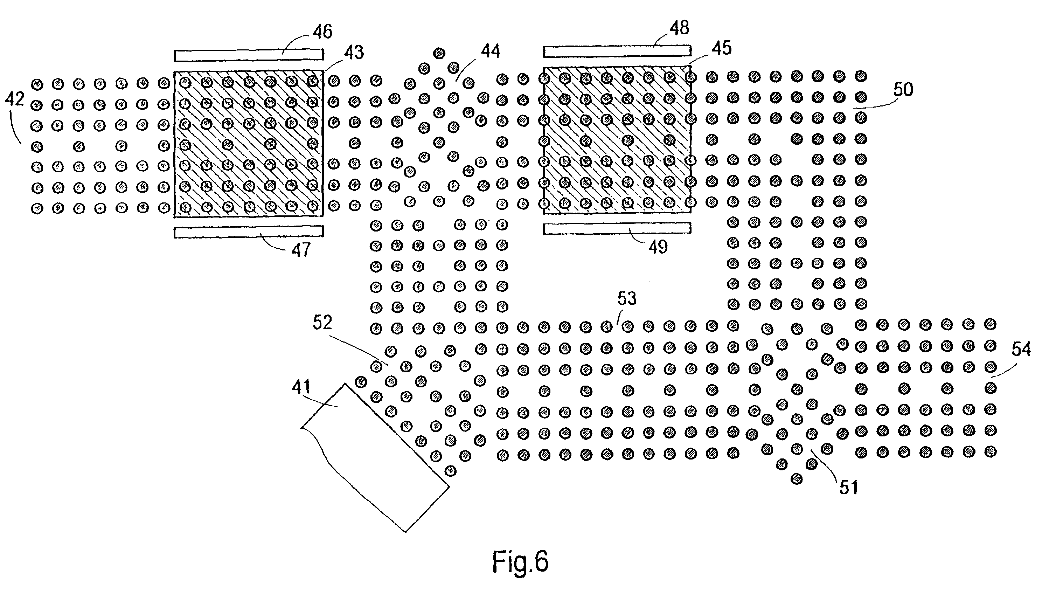

Fig. 6 zeigt ein als Mach-Zehnder-Interferometer ausgebildetes Ausführungsbeispiel. Dabei sind alle Elemente, insbesondere Wellenleiter, Filter, Spiegel und Strahlenteiler von photonischen Kristallen gebildet. Mit dem Interferometer soll die Laufzeit in einem reflektierenden in Fig. 6 lediglich angedeuteten Meßobjekt 41 gemessen werden. Dazu wird das bei 42 zugeführte Licht zunächst durch ein einstellbares Filter 43 geleitet, mit dessen Hilfe die zur Messung zu verwendende Wellenlänge selektiert wird. Das aus dem Filter 43 austretende Licht wird mit Hilfe eines Strahlenteilers 44 zu gleichen Teilen geradeaus zu einem einstellbaren Phasenschieber 45 und reflektiertes zum Meßobjekt 41 geleitet.

Das einstellbare Filter 43 und der einstellbare Phasenschieber 45 bestehen jeweils aus einem photonischen Kristall, wobei die Zwischenräume mit nicht-linear-optischem Material ausgefüllt sind, dessen Dielektrizitätskonstante und damit die optisch wirksamen Abstände der Nadeln mit Hilfe von an Elektroden 46, 47 bzw. 48, 49 angelegten Spannungen steuerbar sind.

An den Phasenschieber 45 schließt sich ein vollständig reflektierender Spiegel 50 an, der das aus dem Phasenschieber 45 austretende Licht einem weiteren Strahlenteiler 51 zuführt.

Vor dem Meßobjekt 41 ist ein als Richtungsweiche 42 ausgebildeter photonischer Kristall angeordnet mit der Wirkung, daß das vom Strahlenteiler 44 ankommende Licht in das Objekt 41 geleitet wird und das im Meßobjekt reflektierte Licht über einen Wellenleiter 43 zum weiteren Strahlenteiler 51 gelangt. Am Ausgang 54 überlagern sich beide Lichtströme. Mit Hilfe eines geeigneten Meßwandlers kann die aus dem Ausgang 54 austretende Intensität gemessen und durch Einstellung der Phase bei 45 auf ein Minimum der Intensität am Ausgang 54 die Phasenverschiebung im Meßobjekt 41 bestimmt werden. Aus den bereits oben genannten Gründen kann auch die in Fig. 6 dargestellte Schaltung äußerst klein ausgelegt werden, beispielsweise mit einer gesamten Länge von etwa 20 µm.

## Patentansprüche

1. Integrierte optische Schaltung mit einem Siliziumsubstrat und darauf angeordneten Wellenleitern mit mindestens einem photonischen Kristall, **dadurch gekennzeichnet, daß** von jeweils einer Nadel oder einer Bohrung gebildete Elemente (14), die den photonischen Kristall bilden, schräg zur optischen Achse stehen und zueinander parallel angeordnet sind.

2. Integrierte optische Schaltung nach Anspruch 1, **dadurch gekennzeichnet, daß** weitere Wellenleiter als Streifen-Wellenleiter (3, 4) ausgebildet sind, wobei zwischen den Streifen-Wellenleitern (3, 4) und dem Siliziumsubstrat (1) eine Isolierschicht (2) angeordnet ist, und daß sich der photonische Kristall von einer Ebene unterhalb der unteren Begrenzungsfläche der Wellenleiter (3, 4) über die obere Begrenzungsfläche der Wellenleiter (3, 4) hinaus erstreckt.

3. Integrierte optische Schaltung nach einem der Ansprüche 1 oder 2, **dadurch gekennzeichnet, daß** die Elemente des mindestens einen photonischen Kristalls Nadeln (14) mit einer hohen Dielektrizitätskonstanten sind, die in Form eines zweidimensionalen periodischen Gitters angeordnet sind.

4. Integrierte optische Schaltung nach einem der Ansprüche 1 oder 2, **dadurch gekennzeichnet, daß** die Elemente des mindestens einen photonischen Kristalls Löcher niedriger Dielektrizitätskonstanten in einem Körper mit einer hohen Dielektrizitätskonstanten sind, die in Form eines zweidimensionalen periodischen Gitters angeordnet sind.

5. Integrierte optische Schaltung nach Anspruch 3, **dadurch gekennzeichnet, daß** die Nadeln (14) auf der Isolierschicht (2) stehen, die im Bereich des photonischen Kristalls eine geringere Stärke als unter den Wellenleitern (3, 4) aufweist.

6. Integrierte optische Schaltung nach Anspruch 3, **dadurch gekennzeichnet, daß** die Nadeln auf dem Siliziumsubstrat stehen.

7. Integrierte optische Schaltung nach einem der Ansprüche 3, 5 oder 6, **dadurch gekennzeichnet, daß** die Zwischenräume zwischen den Nadeln mit nicht-linear-optischem Material ausgefüllt sind und daß mit Hilfe von einer an Feldelektroden (46 bis 49) angelegten Spannung der Brechungsindex des nicht-linear-optischen Materials einstellbar ist.

8. Integrierte optische Schaltung nach einem der vorhergehenden Ansprüche, **dadurch gekennzeichnet, daß** der mindestens eine photonische Kristall (26) durch die Anordnung der Störstellen ein Abzweigfilter darstellt, bei dem abgezweigtes Licht eines selektierten Wellenlängenbereichs seitlich austritt.

9. Integrierte optische Schaltung nach einem der vorhergehenden Ansprüche, **dadurch gekennzeichnet, daß** seitlich austretendes Licht verschiedener Wellenlängenbereiche auf verschiedene Stellen eines parallel verlaufenden photonischen Kristalls fokussierbar ist.

## Claims

1. Integrated optical circuit with a silicon substrate and thereon disposed waveguides with at least one photonic crystal, **characterized in that** elements (14) each formed by a needle or by a hole - said elements (14) forming the photonic crystal - stand obliquely to the optical axis and are disposed parallel to each other.

2. Integrated optical circuit according to claim 1, **characterized in that** further waveguides are in the form of strip waveguides (3, 4), an insulating layer (2) being disposed between the strip waveguides (3, 4) and the silicon substrate (1), and **in that** the photonic crystal extends from a plane below the lower periphery of the waveguides (3, 4) beyond the upper periphery of the waveguides (3, 4).

3. Integrated optical circuit according to any one of claim 1 or 2, **characterized in that** the elements of the at least one photonic crystal are needles (14) with a high dielectric constant, said needles (14) being disposed in the form of a two-dimensional periodic lattice.

4. Integrated optical circuit according to any one of claim 1 or 2, **characterized in that** the elements of the at least one photonic crystal are holes of low dielectric constant in a body with a high dielectric constant, said holes being disposed in the form of a two-dimensional periodic lattice.

5. Integrated optical circuit according to claim 3, **characterized in that** the needles (14) stand on the insulating layer (2), said insulating layer (2) being less thick in the region of the photonic crystal than under the waveguides (3, 4).

6. Integrated optical circuit according to claim 3, **characterized in that** the needles stand on the silicon substrate.

7. Integrated optical circuit according to any one of claim 3, 5 or 6, **characterized in that** the spaces between the needles are filled with nonlinearly optical material, and **in that** the refractive index of the nonlinearly optical material is adjustable by means of a voltage applied at field electrodes (46 to 49).

8. Integrated optical circuit according to any one of the preceding claims, **characterized in that** the at least one photonic crystal (26), through the arrangement of the imperfections, represents a branch filter from which branched light of a selected wavelength range exits laterally.

9. Integrated optical circuit according to any one of the preceding claims, **characterized in that** laterally exiting light of different wavelength ranges is focusable on different sites of a parallel-extending photonic crystal.

## Revendications

1. Circuit intégré optique comprenant un substrat de silicium et des guides d'ondes munis d'au moins un cristal photonique disposés sur ce circuit, **caractérisé en ce que** les éléments (14) constitués chacun d'une aiguille ou d'un trou, qui forment le cristal photonique, sont disposés à l'oblique de l'axe optique et parallèlement les uns aux autres.

2. Circuit intégré optique selon la revendication 1, **caractérisé en ce que** des guides d'ondes supplémentaires se présentent sous la forme de guides rubans (3, 4), une couche isolante (2) étant disposée entre les guides rubans (3, 4) et le substrat de silicium (1), et **en ce que** le cristal photonique s'étend d'une surface située en dessous de la périphérie inférieure des guides d'ondes (3, 4) au delà de la périphérie supérieure des guides d'ondes (3, 4).

3. Circuit intégré optique selon l'une des revendications 1 ou 2, **caractérisé en ce que** les éléments du cristal photonique / des cristaux photoniques sont des aiguilles (14) à constante diélectrique élevée disposées en réseau périodique bidimensionnel.

4. Circuit intégré optique selon l'une des revendications 1 ou 2, **caractérisé en ce que** les éléments du cristal photonique / des cristaux photoniques sont des trous à constante diélectrique faible dans un corps à constante diélectrique élevée disposés en réseau périodique bidimensionnel.

5. Circuit intégré optique selon la revendication 3, **caractérisé en ce que** les aiguilles (14) se trouvent sur la couche isolante (2), dont l'épaisseur est moindre dans la région du cristal photonique que sous les guides d'ondes (3, 4).

6. Circuit intégré optique selon la revendication 3, **caractérisé en ce que** les aiguilles se trouvent sur le substrat de silicium.

7. Circuit intégré optique selon l'une des revendications 3, 5 ou 6, **caractérisé en ce que** les espaces entre les aiguilles sont remplis de matériau optique non linéaire et **en ce que** l'indice de réfraction du matériau optique non linéaire peut être ajusté au moyen d'une tension appliquée à des électrodes de champ (46 à 49).

8. Circuit intégré optique selon l'une des revendications précédentes, **caractérisé en ce que** le cristal photonique / les cristaux photoniques (26), par la disposition des imperfections, constitue(nt) un filtre de dérivation par lequel sort latéralement une lumière dérivée dans une gamme d'ondes sélectionnée.

9. Circuit intégré optique selon l'une des revendications précédentes, **caractérisé en ce que** la lumière de différentes gammes d'ondes sortant latéralement peut être centrée sur différents points d'un cristal photonique placé en parallèle.
